(19)

**Europäisches Patentamt**
**European Patent Office**
**Office européen des brevets**

(11)  **EP 3 982 534 A1**

(12)  **EUROPEAN PATENT APPLICATION**

(43) Date of publication:
**13.04.2022 Bulletin 2022/15**

(21) Application number: **20315433.1**

(22) Date of filing: **12.10.2020**

(51) International Patent Classification (IPC):
**H02P 21/18** (2016.01)     **H02P 6/18** (2016.01)
**H02P 21/24** (2016.01)

(52) Cooperative Patent Classification (CPC):
**H02P 21/18; H02P 6/183; H02P 21/24**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Mitsubishi Electric R&D Centre Europe B.V.**
  **1119 NS Schiphol Rijk (NL)**
  Designated Contracting States:
  **FR**
• **MITSUBISHI ELECTRIC CORPORATION**
  **Chiyoda-ku**
  **Tokyo 100-8310 (JP)**
  Designated Contracting States:
  **AL AT BE BG CH CY CZ DE DK EE ES FI GB GR HR HU IE IS IT LI LT LU LV MC MK MT NL NO PL PT RO RS SE SI SK SM TR**

• **Politecnico di Torino**
  **10129 Torino (IT)**

(72) Inventors:
• **Bueno Mariani, Guilherme**
  **Rennes Cedex 7 (FR)**
• **Voyer, Nicolas**
  **Rennes Cedex 7 (FR)**
• **Varatharajan, Anantaram**
  **10129 Torino (IT)**
• **Pellegrino, Gianmario**
  **10129 Torino (IT)**

(74) Representative: **Cabinet Le Guen Maillet**
  **3, impasse de la Vigie**
  **CS 71840**
  **35418 Saint-Malo Cedex (FR)**

(54)  **METHOD AND DEVICE FOR CONTROLLING AN ELECTRICAL MOTOR**

(57)     The present invention concerns a method and a device for controlling a three-phase motor using a field oriented control system. The invention:
- estimates, in a $dq$ plane incremental inductances $\hat{l}_d$ and $\hat{l}_q$ of the motor,
- determines an incremental saliency $ISR$ of the motor as a ratio between the incremental inductance $\hat{l}_d$ and the incremental inductance $\hat{l}_q$,
- estimates a first current $i_d^*$ from the estimated incremental saliency $\widehat{ISR}$ and a reference incremental saliency $ISR^*$,
- estimates the rotor speed value $\hat{\omega}$ of the motor,
- estimates a second current $i_q^*$ from a reference rotor speed value $\omega^*$, and the estimated rotor speed value $\hat{\omega}$,
- controls the voltage applied to the motor according to the first and second estimated currents.

Fig. 1

**Description**

TECHNICAL FIELD

The present invention relates generally to a device and a method for controlling an electrical motor.

RELATED ART

Mechanical sensor less control is used in electric motor applications for which rotor position feedback is needed, and when rotary encoder is not a viable solution, e.g. in low-cost and/or dusty environment. It basically consists in estimating the rotor angular position by manipulation of available electrical quantities (motor phase or line voltages and currents).

Several algorithms have been proposed in literature to address this problem. A first class of algorithms are based on observation at a sufficient speed of differences in Back Electromotive Force (BEMF) produced in d and q axes. The BEMF may differ due to presence of permanent magnets and/or due to different inductances in d and q axes (in salient pole machines).

At low speeds or standstill, BEMF tends to hide behind the measurement background noise. Therefore, other methods must be used such as dI/dt based methods. For salient pole machines, difference in incremental inductances of d and q axes enables to estimate the position of the machine from comparison of applied voltage steps and current derivatives. Also for these methods, the measurement background noise limits the detection ability to cases with sufficiently high current ripple. At standstill, voltage pulses get very narrow and hard to assert with high precision, e.g. due to switching transients, and current ripple also tends to hide below the measurement noise. Highfrequency, high resolution analog-to-digital converters (ADC) are needed for measurements.

High frequency voltage injection can be used to produce arbitrary current ripple shapes and increase the signal-to-noise ratio for the estimation. The paper of M. Laumann, C Weiner, and R. Kennel entitled "Arbitrary injection based sensorless control with a defined high frequency current ripple and reduced current and sound level harmonics," published in SLED 2017, discloses a method that enables the determination of machine position by injecting high frequency voltage for any injected voltage shape. In practice, high frequency injection is producing audible noise, and deserves special care for either rejecting the produced acoustic noise away from audible frequency band or for reducing/spreading the levels of produced harmonics resulting from injection.

Most methods rely on availability of inductances or differential inductance values, building look up tables (LUT), prior to the estimation. This is not so easy to implement in practice with great accuracy, as inductances significantly vary with currents (saturation and/or cross saturation) and temperature profile of the core. Furthermore, the estimation of inductances in the torque producing regions typically requires some specific instrumentation (locked rotor tests, or rotational tests with test load and rotary encoder) to avoid uncontrolled (and potentially dangerous) operation of the machine. Last, two identical motors may have slightly different inductance maps due to manufacturing tolerances.

Besides estimation of position, sensorless control must also implement the MTPA (maximum torque per Ampere) law, that decides the current vector reference for a given reference torque. Numerous vector references could reach the desired torque, but only one current vector can minimise the amplitude of the current flowing in the machine for the corresponding torque. Because the torque is a combined function of current and flux linkage waveforms, a good estimation of inductances is required to achieve an effective MTPA control.

It is especially difficult to estimate the cross-saturation, that reflects the change of inductance of one saliency axis with the level of current in the other saliency axis. The lack of information on cross-saturation typically causes an erroneous estimation of the position in sensorless control. This error fools the MTPA function and can cause instability in the control.

SUMMARY OF THE INVENTION

The present invention aims to provide a method and a device for determining a precise rotor position without requiring any inductance value knowledge.

To that end, the present invention concerns a method for controlling a three-phase motor using a field oriented control system, characterized in that the method comprises the steps of:

- estimating, in a *dq* plane the incremental inductances $\hat{l}_d$ and $\hat{l}_q$ of the motor,

- determining an incremental saliency $\widehat{ISR}$ of the motor as a ratio between the incremental inductance $\hat{l}_d$ and the incremental inductance $\hat{l}_q$,

- estimating a first current $i_d^*$ from the estimated incremental saliency and a reference incremental saliency $ISR^*$,
- estimating the rotor speed value $\hat{\omega}$ of the motor,
- estimating a second current $i_q^*$ from a reference rotor speed value $\omega^*$, and the estimated rotor speed value $\hat{\omega}$,
- controlling the voltage applied to the motor according to the first and second estimated currents.

The present invention concerns also a device for controlling a three-phase motor using a field oriented control system, characterized in that the device comprises:

- means for estimating in a *dq* plane the incremental inductances $\hat{l_d}$ and $\hat{l_q}$ of the motor,
- means for determining an incremental saliency *ISR* of the motor as a ratio between the incremental inductance $\hat{l_d}$ and the incremental inductance $\hat{l_q}$,
- means for estimating a first current $i_d^*$ from the estimated incremental saliency and a reference incremental saliency $ISR^*$,
- means for estimating the rotor speed value $\hat{\omega}$ of the motor,
- means for estimating a second current $i_q^*$ from a reference rotor speed value $\omega^*$, and the estimated rotor speed value $\hat{\omega}$,
- means for controlling the voltage applied to the motor according to the first and second estimated currents.

Thus, the present invention always exhibits sufficient saliency in order to estimate the rotor position. Under high torque/current, in presence of heavy saturation, a sufficient saliency is maintained. As a result, sensorless control keeps controllability and doesn't diverge.

According to a particular feature, the first and second estimated currents are estimated as:

$$i_d^* = K_{p,ISR}\left(ISR^* - \widehat{ISR}\right) + K_{i,ISR} \int \left(ISR^* - \widehat{ISR}\right) dt$$ where $K_{p,ISR}$ and $K_{i,ISR}$ are constants of a first proportional integral module. $$i_q^* = \frac{T^*}{i_d^* K_L},$$ where $T^*$ is the torque of the motor and

$$T^* = K_{p,\omega}(\omega^* - \hat{\omega}) + K_{i,\omega} \int (\omega^* - \hat{\omega})\, dt$$

where $K_{p,\omega}$ and $K_{i,\omega}$ are constants of a second proportional integral module, and $K_L$ is a gain dependent on the inductances of the machine.

Thus, the machine always exhibit sufficient saliency to enable estimation of rotor position. Under high torque/current, in presence of heavy saturation, sufficient saliency will be maintained and the method will not loose control. Robustness is improved as well in presence of cross-saturation, where the position error due to cross-saturation can be limited in the high saliency regions. The present invention can easily provide current references for robust control schemes, such as field oriented control, or model predicted control. The method can implement speed control, especially at low speeds.

According to a particular feature, the method further comprises the step of estimating a position error of the rotor of the motor and the estimated rotor speed value $\hat{\omega}$ is estimated using a phase lock loop having as input signal the estimated position error.

Thus, the present invention can implement speed control of the machine without position sensor, including at low speeds. The estimated position error is also directly usable for precise position control.

According to a particular feature, the voltage applied to the motor is a voltage vector and consecutive voltage vectors are applied successively during successive periods of time, the estimated incremental inductances are estimated from a stator flux linkage of the motor on *d* or *q* axis and a steady state position error $\varepsilon$.

Thus, the position estimation error can get minimised using model predicted control.

According to a particular feature, the estimated incremental inductance $\hat{l_d}$ and the estimated incremental inductance $\hat{l_q}$ are defined as:

$$\hat{l_d} = \frac{\Delta\lambda_{\hat{d}}^k \Delta\lambda_{\hat{q}}^{k-1} - \Delta\lambda_{\hat{q}}^k \Delta\lambda_{\hat{d}}^{k-1}}{\Delta I_{\hat{d}}^k \Delta\lambda_{\hat{q}}^{k-1} - \Delta I_{\hat{q}}^k \Delta\lambda_{\hat{d}}^{k-1}}$$

$$\hat{l}_{\hat{q}} = \frac{\Delta\lambda_{\hat{q}}^k\Delta\lambda_{\hat{d}}^{k-1} - \Delta\lambda_{\hat{d}}^k\Delta\lambda_q^{k-1}}{\Delta I_{\hat{q}}^k\Delta\lambda_{\hat{d}}^{k-1} - \Delta I_{\hat{d}}^k\Delta\lambda_{\hat{q}}^{k-1}}$$

$$\hat{\varepsilon} = \frac{\hat{l}_{\hat{d}}\hat{l}_{\hat{q}}}{\hat{l}_{\hat{d}} - \hat{l}_{\hat{q}}}\frac{\Delta\lambda_{\hat{d}}^k\Delta\lambda_{\hat{q}}^{k-1} - \Delta\lambda_{\hat{q}}^k\Delta\lambda_{\hat{d}}^{k-1}}{\Delta I_{\hat{d}}^k\Delta\lambda_{\hat{q}}^k - \Delta I_{\hat{q}}^k\Delta\lambda_{\hat{d}}^k}$$

where $k$ denotes the discrete domain representation of the $k^{th}$ sampling instant, $\Delta$ symbolizes $\Delta x^k = x^k - x^{k-1}$, $v_{dq,k}$, $\lambda_{dq}$ is the stator flux linkage on d or q axis.

Thus, provided that the signal-to-noise ratio is sufficient, the sensorless control method can estimate online in real-time the position and the inductances of the machine without any associated lookup table and without any position sensor. The sensorless control method can operate any time on any kind of machine, and for any saturation or temperature conditions.

According to a particular feature, the consecutive voltage vectors are defined as:

$$v_{\hat{d}}^* = i_{\hat{d}}^k R_s + \hat{l}_{\hat{d}}(i_d^* - i_{\hat{d}}^{k+1})/T_s$$

$$v_{\hat{q}}^* = i_{\hat{q}}^k R_s + \hat{l}_{\hat{q}}(i_q^* - i_{\hat{q}}^{k+1})/T_s$$

According to a particular feature, the method further comprises the step of injecting voltage signals that are equal to $v_{dh}^*\cos(\omega_{qh}t)$ and $v_{qh}^*\cos(\omega_{qh}t)$, where $\omega_{qh}$ and $\omega_{qh}$ are the injection frequencies on axis d and q respectively, $v_{dh}^*$ and $v_{qh}^*$ are the amplitude of the injected voltage in axis d and q respectively, the incremental inductances $\hat{l}_{\hat{d}}$ and $\hat{l}_{\hat{q}}$ of the motor are estimated as:

$$\hat{l}_{\hat{d}} = \frac{v_{dh}^*}{i_{dh}\omega_{dh}}$$

$$\hat{l}_q = \frac{v_{qh}^*}{i_{qh}\omega_{qh}}$$

where $i_{dh}$ is the high frequency current component on d axis, $i_{qh}$ is the high frequency current component on q axis, $i_{dh}$, $i_{qh}$ are obtained by a heterodyne demodulation, and the estimated position error is:

$$\hat{\varepsilon} = \frac{\hat{l}_{\hat{d}}\hat{l}_{\hat{q}}}{\hat{l}_{\hat{d}} - \hat{l}_{\hat{q}}}\frac{i_{qh}\omega_{dh}}{v_{dh}^*}$$

Thus, the sensorless control method can estimate online in real-time the position and the inductances of the machine without any lookup table associated with it, and without any position sensor. The sensorless control method can operate any time on any kind of machine, and for any saturation or temperature conditions. The signal-to-noise ratio is maintained high in presence of injected signal.

According to a particular feature, the method further comprises the step of injecting voltage signals that are equal to $v_{dh}^*\cos(\omega_{dh}t)$ with a frequency of $\omega_{dh}$ on the d axis and a squarewave injection on the q axis of period $T_s$

and amplitude $v_q$ and incremental inductances are:

$$\hat{l}_{\hat{d}} = \frac{\tilde{v_{dh}}}{i_{dh}\omega_{dh}}$$

$$\hat{l}_{\hat{q}} = LPF\left(\frac{v_q^{k-1}T_s}{\Delta i_q^k}\right)$$

where LPF denotes a low pass filter, $k$ denotes the discrete domain representation of the $k^{th}$ sampling instant, $\Delta$ symbolizes $\Delta x^k = x^k - x^{k-1}$

and the estimated position error is:

$$\hat{\varepsilon} = \frac{\hat{l}_{\hat{d}}\hat{l}_{\hat{q}}}{\hat{l}_{\hat{d}} - \hat{l}_{\hat{q}}} \frac{i_{qh}\omega_{dh}}{v_{dh}^*}$$

Thus, the injection frequency on the q axis can be closer to the switching frequency and the flux span becomes smaller, reducing the acoustic noise generated by the high frequency injection.

According to a particular feature, the voltage applied to the motor is determined as:

$$v_{\hat{d}}^{**} = v_{dh}^* \cos(\omega_{dh}t) + v_{\hat{d}}^*$$

$$v_{\hat{q}}^{**} = v_{qh}^* \cos(\omega_{qh}t) + v_{\hat{q}}^*$$

where:

$$v_{\hat{d}}^* = K_{p,Id}(I_d^* - I_{\hat{d}}) + K_{i,Id}\int (I_d^* - I_{\hat{d}})\, dt$$

$$v_{\hat{q}}^* = K_{p,Iq}(I_q^* - I_{\hat{q}}) + K_{i,Iq}\int (I_q^* - I_{\hat{q}})\, dt$$

where $K_{p,Id}$ is the proportional gain of a third proportional integral regulator, $K_{i,Id}$ is the integral gain for the d axis of the third proportional integral regulator, $K_{p,Iq}$ is the proportional gain of a fourth proportional integral regulator and $K_{i,Iq}$ is the integral gain for the q axis of the fourth proportional integral regulator.

Thus, the present invention implements field oriented control on current references determined according to the invention. The method is effective in keeping the desired saliency ratio and thus keeps good controllability.

According to a particular feature, the method further comprises the step of injecting a current $i^*_{dh}cos(\omega_h t)$ on the current reference of the $d$ axis and the incremental inductances are equal to:

$$\widehat{l_q} = \frac{\Delta\lambda_{\hat{q}}^k\Delta\lambda_{\hat{d}}^{k-1} - \Delta\lambda_{\hat{d}}^k\Delta\lambda_q^{k-1}}{\Delta I_{\hat{q}}^k\Delta\lambda_{\hat{d}}^{k-1} - \Delta I_{\hat{d}}^k\Delta\lambda_{\hat{q}}^{k-1}}$$

$$\widehat{l_d} = \frac{v_{\widehat{dh}}}{i_{dh}^*\omega_h}$$

where $k$ denotes the discrete domain representation of the $k^{th}$ sampling instant, $\Delta$ symbolizes $\Delta x^k = x^k - x^{k-1}$, $v_{dq,k}$, $\lambda_{dq}$ is the stator flux linkage on d or q axis and $\widehat{v_{dh}}$ is the high frequency amplitude of voltage injected on the d axis.

Thus, inductance on axis d can get estimated even for high saliency machine, where inductance on d axis is so high that the current response would otherwise be too small.

According to a particular feature, the voltage applied to the motor is determined from:

$$v_{\hat{d}}^* = i_{\hat{d}}^{k}R_s + \hat{l}_{\hat{d}}\left(i_d^* - i_{\hat{d}}^{k+1}\right)/T_s$$

$$v_{\hat{q}}^* = i_{\hat{q}}^{k}R_s + \hat{l}_{\hat{q}}\left(i_q^* - i_{\hat{q}}^{k+1}\right)/T_s$$

Where $R_s$ is the stator resistance of the motor and $T_s$ is the sampling time.

Thus, the estimation of inductances can be determined in control conditions using at least two dissimilar consecutive voltage vectors. This is as example applicable to the control of machine voltage using voltage switched inverters, where dissimilar voltage vectors are applied to the machine terminal according to different inverter state conditions. This includes deadbeat controllers such as FCS-MPC.

BRIEF DESCRIPTION OF THE DRAWINGS

The characteristics of the invention will emerge more clearly from a reading of the following description of example embodiments, the said description being produced with reference to the accompanying drawings, among which:

Fig. 1 represents a first example of a Field-Oriented Control system in which the present invention is implemented;
Fig. 2 represents a second example of a Field-Oriented Control system in which the present invention is implemented;
Fig. 3 represents a third example of a Field-Oriented Control system in which the present invention is implemented;
Fig. 4 represents an incremental saliency ratio control module which is implemented in the first, second and third examples of the Field-Oriented Control system;
Fig. 5 represents an architecture of an estimation module that controls a motor;
Fig. 6 represents an example of an algorithm for controlling a motor.

DESCRIPTION

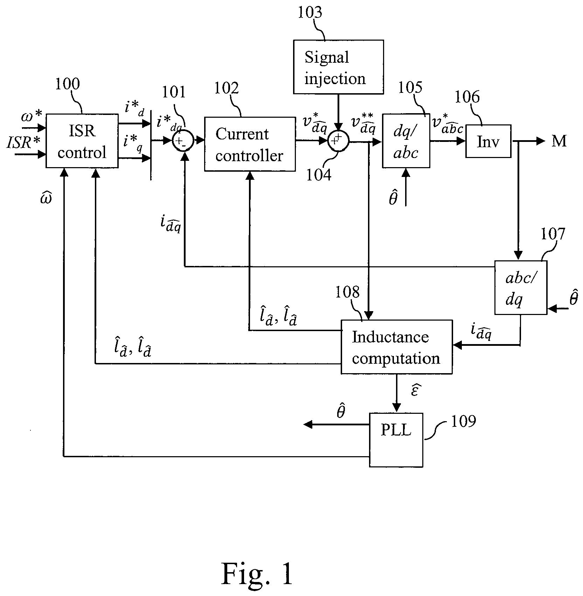

**Fig. 1** represents a first example of a Field-Oriented Control system in which the present invention is implemented.

Field-Oriented Control (FOC) is a variable-frequency drive control method in which the stator currents of a three-phase AC electric motor are identified as two orthogonal components that can be visualized with a vector $i_{dq}$. In the $\alpha\beta$ reference frame representative of the stator, the vector rotates around the origin in synchronism with the rotor. In the $dq$ reference frame representative of the rotor, the vector, at steady-state, is stabilised around the reference current levels $i_{dq}^*$ using (PI) controllers. The current reference can be as example determined from torque reference, which can itself be determined from a speed controller, depending on the application.

FOC is used to control AC synchronous and induction motors.

It was originally developed for high-performance motor applications that are required to operate smoothly over a variable speed range, generate full torque at zero speed, and have high dynamic performance including fast acceleration and deceleration.

Field-Oriented Control system, in the example of Fig., 1 is more precisely a dual signal injection current vector control.

In Fig. 1, the system comprises an incremental saliency ratio (ISR) module 100. The incremental saliency ratio module 100 receives a reference rotor speed value $\omega^*$, an estimated rotor speed value $\hat{\omega}$, an incremental saliency ratio reference $ISR^*$ and an estimated incremental saliency ratio $\widehat{ISR} = \dfrac{\hat{l}_{\hat{d}}}{\hat{l}_{\hat{q}}}$ where $\hat{l}_{\hat{d}}$ and $\hat{l}_{\hat{q}}$ are estimated incremental inductances in the estimated $dq$ frame provided by an inductance computation module 108.

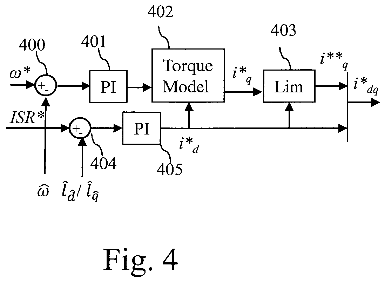

The incremental saliency ratio module 100 will be disclosed more precisely in Fig. 4.

The output of the incremental saliency ratio module 100 provides a reference current $i^*_{dq}$ to a subtracting module 101 that subtracts a measured current $i_{\widehat{dq}}$ to the reference current $i^*_{dq}$.

The ouput of the subtracting module 101 is provided to a current controller 102, which provides voltage references $v^*_{dq}$ through two proportional integral current PI regulators. The PI regulators are tuned with the estimated inductances $\hat{l}_d$ and $\hat{l}_q$.

The output of the current controller 102 is provided to an adding module 104 that adds the controlled current injection signal to a dual injection signal.

The output of the current controller 102 is defined as:

$$v_{\hat{d}}{}^* = K_{p,Id}\left(I_d{}^* - I_{\hat{d}}\right) + K_{i,Id}\int \left(I_d{}^* - I_{\hat{d}}\right) dt$$

$$v_{\hat{q}}{}^* = K_{p,Iq}\left(I_q{}^* - I_{\hat{q}}\right) + K_{i,Iq}\int \left(I_q{}^* - I_{\hat{q}}\right) dt$$

where $K_{p,Id}$ is the proportional gain of a third proportional integral regulator, $K_{i,Id}$ is the integral gain for the d axis of the third proportional integral regulator, $K_{p,Iq}$ is the proportional gain of a fourth proportional integral regulator and $K_{i,Iq}$ is the integral gain for the q axis of the fourth proportional integral regulator.

The dual injection signal is provided by an injection signal module 103 and is equal to $v^*_{dh}\cos(\omega_{qh}t)$ and $v^*_{qh}\cos(\omega_{qh}t)$, where $\omega_{qh}$ and $\omega_{qh}$ are predetermined angular frequencies, $v^*_{dh}$ and $v^*_{qh}$ are the amplitude of the injected voltage in axis d and q respectively.

The angular frequency values of the dual injection signal is for example comprised between a fundamental frequency and the switching frequency. In a variant, the injection signals have different angular frequencies and different shapes. For example, the injection signal on one axis is a square wave signal having a first angular frequency between the fundamental frequency and the switching frequency and the injection signal on the other axis is a sinewave signal having a second angular frequency between the fundamental frequency and the switching frequency, but different from the first one and the two different frequencies do not share the same harmonic order for non intereference of one with another.

As other example, injection signals of both axes are sinewave signals with different angular frequency. The $v^{**}_{\widehat{dq}}$ the output of the summing module 104 is expressed as:

$$v_{\hat{d}}{}^{**} = v^*_{dh}\cos(\omega_{dh}t) + v_{\hat{d}}{}^*$$

$$v_{\hat{q}}{}^{**} = v^*_{qh}\cos(\omega_{qh}t) + v_{\hat{q}}{}^*$$

The output $v^{**}_{\widehat{dq}}$ of the summing module 104 is provided to an inverse Park transform module 105 and to an inductance computation module 108. The output $v^*_{\widehat{abc}}$ of the inverse Park transformation module 105 is provided to an inverter 106. The output voltages of the inverter 106 are connected to the stator of a motor, and the currents that are measured at the output of the inverter are connected to a Park transformation module 107. The Park transformation module 107 determines the measured current $i_{\widehat{dq}}$ using an estimated rotor position value. The measured current $i_{\widehat{dq}}$ is provided to the inductance computation module 108.

The inductance computation module 108 determines by heterodyne demodulation, an estimated error $\hat{\varepsilon}$ and

estimated incremental inductances $\hat{l}_d$ and $\hat{l}_q$ on the estimated dq frame as follows :

$$\hat{\varepsilon} = \frac{\hat{l}_{\hat{d}}\hat{l}_{\hat{q}}}{\hat{l}_{\hat{d}} - \hat{l}_{\hat{q}}} \frac{i_{qh}\omega_{dh}}{v_{dh}^*}$$

$$\hat{l}_{\hat{d}} = \frac{v_{dh}^*}{i_{dh}\omega_{dh}}$$

$$\hat{l}_q = \frac{v_{qh}^*}{i_{qh}\omega_{qh}}$$

In the case of a squarewave injection on the q and $v_{dh}^* \cos(\omega_{qh}t)$ on the d axis

$$\hat{l}_{\hat{d}} = \frac{v_{dh}^*}{i_{dh}\omega_{dh}}$$

$$\hat{l}_{\hat{q}} = LPF\left(\frac{v_q^{k-1}T_s}{\Delta i_q^k}\right)$$

where LPF denotes a low pass filter, $k$ denotes the discrete domain representation of the $k^{th}$ sampling instant, $\Delta$ symbolizes $\Delta x^k = x^k - x^{k-1}$

and the estimated position error is:

$$\hat{\varepsilon} = \frac{\hat{l}_{\hat{d}}\hat{l}_{\hat{q}}}{\hat{l}_{\hat{d}} - \hat{l}_{\hat{q}}} \frac{i_{qh}\omega_{dh}}{v_{dh}^*}.$$

The estimated error $\hat{\varepsilon}$ is provided to a phase lock loop module 109.

The phase lock loop module 109 determines the estimated rotor speed value $\hat{\omega}$ and an estimated rotor position $\hat{\theta}$ that is provided to the inverse Park tranformation module 105 and the Park transformation module 107.

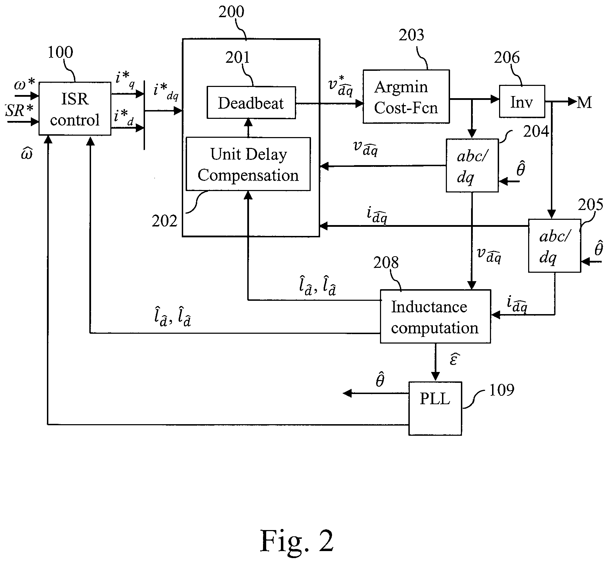

**Fig. 2** represents a second example of a Field-Oriented Control system in which the present invention is implemented.

Field-Oriented Control system in the example of Fig. 2 is more precisely an injection less FCS-MPC (Finite-Control-Set Model Predictive Control) controller.

In Fig. 2, the system comprises an incremental saliency ratio (ISR) module 100.

The incremental saliency ratio module 100 receives a reference rotor speed value $\omega^*$, an estimated rotor speed value $\hat{\omega}$, an incremental saliency ratio reference $ISR^*$ and an estimated incremental saliency ratio $\widehat{ISR} = \frac{\hat{l}_{\hat{d}}}{\hat{l}_{\hat{q}}}$ where $\hat{l}_d$ and $\hat{l}_q$ are estimated incremental inductances in the estimated $dq$ frame provided by an inductance computation module 208.

The incremental saliency ratio module 100 will be disclosed more precisely in Fig. 4.

The output of the incremental saliency ratio module 100 provides a reference current $i_{dq}^*$ to a MPC (Model Predictive Control) module 200. The module 200 is reponsible for giving the ideal estimated voltage at the next inverter switching step (k+1), by means of a unit delay compensation module 202 and a deadbeat module 201.

The output of the MPC module 200 provides an estimated voltage $v^*_{\widehat{dq}}$ to a minimum cost function module 203 that determines which voltage vector is the closest to the ideal voltage vector estimated in the module MPC 200 among seven vectors achievable with inverter 206.

The calculation of $v^*_{\widehat{dq}}$ from the MPC module 200 is based on the estimation of the current and voltage at the next step. The estimation of the current is :

$$i_{\hat{d}}^{\,k+1} = i_{\hat{d}}^{\,k} + \frac{T_s\left(v_{\hat{d}}^{\,k} - i_{\hat{d}}R_s\right)}{\hat{l}_{\hat{d}}}$$

$$i_{\hat{q}}^{\,k+1} = i_{q}^{\,k} + \frac{T_s\left(v_{\hat{q}}^{\,k} - i_{\hat{q}}R_s\right)}{\hat{l}_{\hat{q}}}$$

where $R_s$ is the stator resistance of the motor and $T_s$ is the sampling time, which is then used to calculate the voltage references $v^*_{\widehat{dq}}$ :

$$v_{\hat{d}}^* = i_{\hat{d}}^{\,k}R_s + \hat{l}_{\hat{d}}\left(i_d^* - i_{\hat{d}}^{\,k+1}\right)/T_s$$

$$v_{\hat{q}}^* = i_{\hat{q}}^{\,k}R_s + \hat{l}_{\hat{q}}\left(i_q^* - i_{\hat{q}}^{\,k+1}\right)/T_s$$

The output of the mininum cost fonction module 203 is provided to a Park transformation module 204 and to an inverter 206. The output voltages of the inverter 206 are connected to the stator of a motor M and measured currents at the output of the inverter are connected to a Park transformation module 205.

The Park transformation modules 204 and 205 determine in the estimated frame $\widehat{dq}$ a voltage $v_{\widehat{dq}}$ and current $i_{\widehat{dq}}$ respectively, using an estimated rotor position $\hat{\theta}$. Both voltage $v_{\widehat{dq}}$ and current $i_{\widehat{dq}}$ are then provided to the MPC module 200 and to the inductance computation module 208.
The inductance computation module 208 determines an estimated error $\hat{\varepsilon}$ and estimated incremental inductances $\hat{l}_d$ and $\hat{l}_q$ on the estimated $dq$ frame.

These estimates at low speeds are built from flux spans $\Delta\lambda_{\widehat{dq}}^{k}$ observed between k-1$^{th}$ and k$^{th}$ steps :

$$\Delta\lambda_{\widehat{dq}}^{k-1} = \dot{v}_{dq,k-1}T_s, \; \Delta\lambda_{\widehat{dq}}^{k} = v_{dq,k}T_s$$

where $k$ denotes the discrete domain representation of the $k^{th}$ sampling instant, $\Delta$ symbolizes $\Delta x^k = x^k - x^{k-1}$, $v_{dq,k}$, $\lambda_{dq}$ is the stator flux linkage on d or q axis

$$\left[\Delta\lambda_{\widehat{dq}}^{k} \quad \Delta\lambda_{\widehat{dq}}^{k-1}\right] = l_{\tilde{\theta}}\left[\Delta i_{\widehat{dq}}^{k} \quad \Delta i_{\widehat{dq}}^{k-1}\right]$$

where $l_{\tilde{\theta}}$ is the incremental inductance matrix and $\tilde{\theta}$ is the steady state position error.

$$l_{\tilde{\theta}} = \begin{bmatrix} l_\Sigma + l_\Delta \cos(2\tilde{\theta}) & l_\Delta \sin(2\tilde{\theta}) \\ l_\Delta \sin(2\tilde{\theta}) & l_\Sigma - l_\Delta \cos(2\tilde{\theta}) \end{bmatrix}$$

$$l_{\tilde{\theta}}^{-1} = \frac{\begin{bmatrix} l_\Sigma + l_\Delta \cos(2\tilde{\theta}) & -l_\Delta \sin(2\tilde{\theta}) \\ -l_\Delta \sin(2\tilde{\theta}) & l_\Sigma - l_\Delta \cos(2\tilde{\theta}) \end{bmatrix}}{(l_\Sigma + l_\Delta \cos(2\tilde{\theta}))(l_\Sigma - l_\Delta \cos(2\tilde{\theta})) - (l_\Delta \sin(2\tilde{\theta}))^2}$$

and where

$$l_\Sigma = \frac{l_d + l_q}{2}, \; l_\Delta = \frac{l_d - l_q}{2}$$

For small position error $\tilde{\theta}$, $\cos(2\tilde{\theta}) \approx 1$ ; $\sin(2\tilde{\theta}) \simeq 2\tilde{\varepsilon}$

$$l_{\tilde{\theta}}^{-1} \simeq \begin{bmatrix} \hat{l}_{\hat{d}}^{-1} & -\dfrac{\hat{l}_{\hat{d}} - \hat{l}_{\hat{q}}}{\hat{l}_{\hat{d}} \hat{l}_{\hat{q}}} \hat{\varepsilon} \\ -\dfrac{\hat{l}_{\hat{d}} - \hat{l}_{\hat{q}}}{\hat{l}_{\hat{d}} \hat{l}_{\hat{q}}} \hat{\varepsilon} & \hat{l}_{\hat{q}}^{-1} \end{bmatrix}$$

$$\begin{bmatrix} \Delta i_{\hat{d}}^k & \Delta i_{\hat{q}}^k \\ \Delta i_{\hat{d}}^{k-1} & \Delta i_{\hat{q}}^{k-1} \end{bmatrix} \begin{bmatrix} \Delta \lambda_{\hat{d}}^k & \Delta \lambda_{\hat{q}}^k \\ \Delta \lambda_{\hat{d}}^{k-1} & \Delta \lambda_{\hat{q}}^{k-1} \end{bmatrix}^{-1} \simeq \begin{bmatrix} \hat{l}_{\hat{d}}^{-1} & -\dfrac{\hat{l}_{\hat{d}} - \hat{l}_{\hat{q}}}{\hat{l}_{\hat{d}} \hat{l}_{\hat{q}}} \hat{\varepsilon} \\ -\dfrac{\hat{l}_{\hat{d}} - \hat{l}_{\hat{q}}}{\hat{l}_{\hat{d}} \hat{l}_{\hat{q}}} \hat{\varepsilon} & \hat{l}_{\hat{q}}^{-1} \end{bmatrix}$$

The inductance computation module 208 determines the estimated error $\tilde{\varepsilon}$ and estimated incremental inductances $\hat{l}_{\hat{d}}$ and $\hat{l}_{\hat{q}}$ on the estimated *dq* frame as follows.

$$\hat{l}_{\hat{d}} = \frac{\Delta \lambda_{\hat{d}}^k \Delta \lambda_{\hat{q}}^{k-1} - \Delta \lambda_{\hat{q}}^k \Delta \lambda_{\hat{d}}^{k-1}}{\Delta I_{\hat{d}}^k \Delta \lambda_{\hat{q}}^{k-1} - \Delta I_{\hat{q}}^k \Delta \lambda_{\hat{d}}^{k-1}}$$

$$\hat{l}_{\hat{q}} = \frac{\Delta \lambda_{\hat{q}}^k \Delta \lambda_{\hat{d}}^{k-1} - \Delta \lambda_{\hat{d}}^k \Delta \lambda_{\hat{q}}^{k-1}}{\Delta I_{\hat{q}}^k \Delta \lambda_{\hat{d}}^{k-1} - \Delta I_{\hat{d}}^k \Delta \lambda_{\hat{q}}^{k-1}}$$

$$\hat{\varepsilon} = \frac{\hat{l}_{\hat{d}} \hat{l}_{\hat{q}}}{\hat{l}_{\hat{d}} - \hat{l}_{\hat{q}}} \frac{\Delta \lambda_{\hat{d}}^k \Delta \lambda_{\hat{q}}^{k-1} - \Delta \lambda_{\hat{q}}^k \Delta \lambda_{\hat{d}}^{k-1}}{\Delta I_{\hat{d}}^k \Delta \lambda_q^k - \Delta I_q^k \Delta \lambda_d^k}$$

The estimated error $\hat{\varepsilon}$ is provided to a phase lock loop module 109.

The phase lock loop module 109 determines the estimated rotor speed value $\hat{\omega}$ and an estimated rotor position $\hat{\theta}$ that is provided to the Park transformations modules 204 and 205.

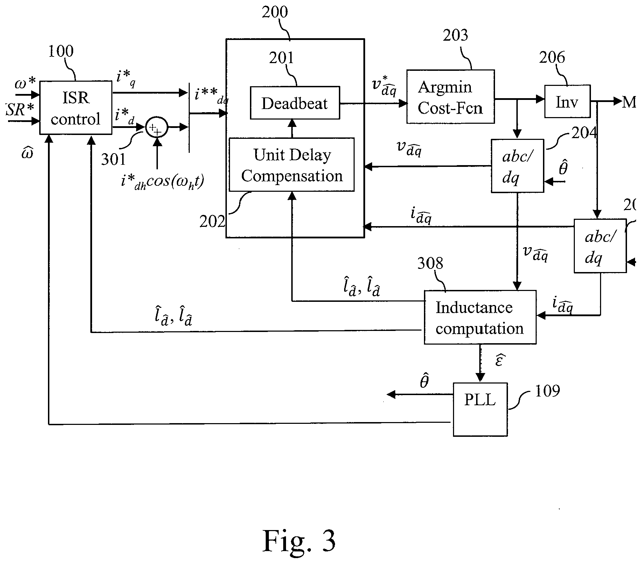

**Fig. 3** represents a third example of a Field-Oriented Control system in which the present invention is implemented.

Field-Oriented Control system, in the example of Fig. 3, is more precisely an injection aided FCS-MPC (Finite-ControlSet -Model Predictive Control) controller.

In Fig. 3, the system comprises an incremental saliency ratio (ISR) module 100.

The incremental saliency ratio module 100 receives a reference rotor speed value $\omega^*$, an estimated rotor speed

value $\hat{\omega}$, an incremental saliency ratio reference *ISR\** and an estimated incremental saliency ratio $\widehat{ISR} = \dfrac{\hat{l}_{\hat{d}}}{\hat{l}_{\hat{q}}}$ where $\hat{l}_{\hat{d}}$ and $\hat{l}_{\hat{q}}$ are estimated incremental inductances in the estimated dq frame provided by an inductance computation module 308.

The incremental saliency ratio module 100 will be disclosed more precisely in Fig. 4.

The output of the incremental saliency ratio module 100 provides a reference current $i_d^*$ and $i_q^*$ to a sum block 301 where an injection of $i_{dh}cos(\omega_h t)$ on the current reference of the $d$ axis $(i_d^*)$ is made. The output of the module 301 is combined to $i_q^*$ giving $i^{**}{}_{dq}$, which is finally connected to a MPC (Module Predictive Control) module 200. The module 200 estimates an ideal voltage at the next inverter switching step (k+1), by means of a unit delay compensation block 202 and a deadbeat module 201 which is directly responsible for the estimation of the ideal voltage at the nex step (k+1).

The output of the MPC module 200 provides an estimated voltage $v_{\widehat{dq}}^*$ to a minimum cost function module 203 that determines which voltage vector is the closest to the ideal voltage vector estimated in the module MPC 200 among seven vectors achievable with inverter 206.

The calculation of $v_{\widehat{dq}}^*$ from the MPC module 200 is based on the estimation of the current and voltage at the next step instead of using a proportional integral regulator. The estimation of the current is :

$$i_{\hat{d}}{}^{k+1} = i_{\hat{d}} + \frac{T_s(v_{\hat{d}}{}^k - i_{\hat{d}}R_s)}{\hat{l}_{\hat{d}}}$$

$$i_{\hat{q}}{}^{k+1} = i_{\hat{q}} + \frac{T_s(v_{\hat{q}}{}^k - i_{\hat{q}}R_s)}{\hat{l}_{\hat{q}}}$$

which is then used to calculate the voltage references $v_{\widehat{dq}}^*$ :

$$v_{\hat{d}}^* = i_{\hat{d}}{}^k R_s + \hat{l}_{\hat{d}}\big(i_d{}^* - i_{\hat{d}}{}^{k+1}\big)/T_s$$

$$v_{\hat{q}}^* = i_{\hat{q}}{}^k R_s + \hat{l}_{\hat{q}}\big(i_q{}^* - i_{\hat{q}}{}^{k+1}\big)/T_s$$

The output of the mininum cost function module 203 is provided to a Park transformation module 204 and to an inverter 206. The output voltages of the inverter 206 are connected to the stator of a motor M and measured currents at the output of the inverter are connected to a Park transformation module 205.

The output of the Park transformation modules 204 and 205, using an estimated rotor position $\hat{\theta}$ provides a voltage in the estimated dq frame $v_{\widehat{dq}}$ and current $i_{\widehat{dq}}$ on the estimated frame $\widehat{dq}$ to the MPC module 200.

The output $i_{\widehat{dq}}$ of the Park transformation module 205 is provided to the inductance computation module 308.

The inductance computation module 308 determines an estimated error $\hat{\varepsilon}$ and estimated incremental inductances $\hat{l}_{\hat{d}}$ and $\hat{l}_{\hat{q}}$ on the estimated dq frame as follows:

$$\Delta\lambda_{\widetilde{dq}}^{k-1} = v_{dq,k-1}T_s, \ \Delta\lambda_{\widetilde{dq}}^{k} = v_{dq,k}T_s$$

where $k$ denotes the discrete domain representation of the $k^{th}$ sampling instant, $\Delta$ symbolizes $\Delta x^k = x^k - x^{k-1}$, $v_{\widetilde{dq},k}$, $\lambda_{dq}$ is the stator flux linkage on $d$ or $q$ axis

$$\left[\Delta\lambda_{\widetilde{dq}}^{k} \quad \Delta\lambda_{\widetilde{dq}}^{k-1}\right] = l_{\widetilde{\theta}}\left[\Delta i_{\widetilde{dq}}^{k} \quad \Delta i_{\widetilde{dq}}^{k-1}\right]$$

where $l_{\widetilde{\theta}}$ is the incremental inductance matrix and $\widetilde{\theta}$ is the steady state position error.

$$l_{\widetilde{\theta}} = \begin{bmatrix} l_\Sigma + l_\Delta\cos(2\widetilde{\theta}) & l_\Delta\sin(2\widetilde{\theta}) \\ l_\Delta\sin(2\widetilde{\theta}) & l_\Sigma - l_\Delta\cos(2\widetilde{\theta}) \end{bmatrix}$$

$$l_{\widetilde{\theta}}^{-1} = \frac{\begin{bmatrix} l_\Sigma + l_\Delta\cos(2\widetilde{\theta}) & -l_\Delta\sin(2\widetilde{\theta}) \\ -l_\Delta\sin(2\widetilde{\theta}) & l_\Sigma - l_\Delta\cos(2\widetilde{\theta}) \end{bmatrix}}{(l_\Sigma + l_\Delta\cos(2\widetilde{\theta}))(l_\Sigma - l_\Delta\cos(2\widetilde{\theta})) - (l_\Delta\sin(2\widetilde{\theta}))^2}$$

$$l_\Sigma = \frac{l_d + l_q}{2}, \ l_\Delta = \frac{l_d - l_q}{2} :$$

As $\cos(2\widetilde{\theta}) \simeq 1$; $\sin(2\widetilde{\theta}) \simeq 2\widehat{\varepsilon}$

$$l_{\widetilde{\theta}}^{-1} \simeq \begin{bmatrix} \widehat{l}_{\widehat{d}}^{-1} & -\dfrac{\widehat{l}_{\widehat{d}} - \widehat{l}_{\widehat{q}}}{\widehat{l}_{\widehat{d}}\widehat{l}_{\widehat{q}}}\widehat{\varepsilon} \\ -\dfrac{\widehat{l}_{\widehat{d}} - \widehat{l}_{\widehat{q}}}{\widehat{l}_{\widehat{d}}\widehat{l}_{\widehat{q}}}\widehat{\varepsilon} & \widehat{l}_{\widehat{q}}^{-1} \end{bmatrix}$$

$$\begin{bmatrix} \Delta i_{\widehat{d}}^{k} & \Delta i_{\widehat{q}}^{k} \\ \Delta i_{\widehat{d}}^{k-1} & \Delta i_{\widehat{q}}^{k-1} \end{bmatrix}\begin{bmatrix} \Delta\lambda_{\widehat{d}}^{k} & \Delta\lambda_{\widehat{q}}^{k} \\ \Delta\lambda_{\widehat{d}}^{k-1} & \Delta\lambda_{\widehat{q}}^{k-1} \end{bmatrix}^{-1} \simeq \begin{bmatrix} \widehat{l}_{\widehat{d}}^{-1} & -\dfrac{\widehat{l}_{\widehat{d}} - \widehat{l}_{\widehat{q}}}{\widehat{l}_{\widehat{d}}\widehat{l}_{\widehat{q}}}\widehat{\varepsilon} \\ -\dfrac{\widehat{l}_{\widehat{d}} - \widehat{l}_{\widehat{q}}}{\widehat{l}_{\widehat{d}}\widehat{l}_{\widehat{q}}}\widehat{\varepsilon} & \widehat{l}_{\widehat{q}}^{-1} \end{bmatrix}$$

from which we get

$$\widehat{l}_{\widehat{q}} = \frac{\Delta\lambda_{\widehat{q}}^{k}\Delta\lambda_{d}^{k-1} - \Delta\lambda_{\widehat{d}}^{k}\Delta\lambda_{q}^{k-1}}{\Delta I_{\widehat{q}}^{k}\Delta\lambda_{\widehat{d}}^{k-1} - \Delta I_{\widehat{d}}^{k}\Delta\lambda_{\widehat{q}}^{k-1}}$$

$$\widehat{\varepsilon} = \frac{\widehat{l}_{\widehat{d}}\widehat{l}_{\widehat{q}}}{\widehat{l}_{\widehat{d}} - \widehat{l}_{\widehat{q}}}\frac{\Delta\lambda_{\widehat{d}}^{k}\Delta\lambda_{\widehat{q}}^{k-1} - \Delta\lambda_{\widehat{q}}^{k}\Delta\lambda_{\widehat{d}}^{k-1}}{\Delta I_{d}^{k}\Delta\lambda_{q}^{k} - \Delta I_{q}^{k}\Delta\lambda_{d}^{k}}$$

Assuming a current injection in the d axis for high saliency machines, the inductance estimation is made by:

$$\hat{l}_{\hat{d}} = \frac{v_{\widehat{dh}}}{i^*_{\widehat{dh}}\omega_h}$$

In a variant, voltage injection is used instead of a current injection. If a voltage injection is used, the injection would be made between the modules 203 and 200 instead at the modules 301 was used instead of a current one we would have:

$$\hat{l}_{\hat{d}} = \frac{v^*_{\widehat{dh}}}{\hat{i}_{\widehat{dh}}\omega_h}$$

The estimated error $\hat{\varepsilon}$ is provided to a phase lock loop module 109.

The phase lock loop module 109 determines the estimated rotor speed value $\hat{\omega}$ and an estimated rotor position $\hat{\theta}$ that is provided to the Park transformation modules 204 and 205.

**Fig. 4** represents an incremental saliency ratio control module which is implemented in the first and second and third examples of the Field-Oriented Control system.

The incremental saliency ratio control module 100 comprises PI proportional-integral regulators 401 and 405, a current limiter 403 and two subtracting modules 400 and 404.

The subtracting module 400 subtracts to the reference rotor speed value $\omega^*$ the estimated rotor speed value $\hat{\omega}$ and provides the result of the subtracting to the proportional integral module 401.

The output of the proportional integral module 401 is the torque reference $T^*$ and it is provided to a Torque model module 402 with the output of the block 405, the current reference $i_d^*$ in the d axis makes possible to calculate the current reference $i_q^*$ in the q axis:

$$i_q{}^* = \frac{T^*}{I_d{}^* K_L}$$

with $K_L = \frac{3}{2}P\left(L_d - L_q\right).L_d, L_q\left(\text{ e.g. } \left|V_{dq}/\widehat{\omega}I_{qd}\right|\right.$ or using nameplate values) and P is the number of pole pairs.

In a variant, the torque reference is identified as current reference $I_q^*$ in the q axis. The torque reference $T^*$ issued by 2nd PI regulator is a virtual torque, representative of $I_q^*$ rather than torque:

$$i_q{}^* = T^*$$

The output of the Torque model module 402 is connected to a current limitation module 403 that limits the current to a current value on the stator $\left|i_s^{max}\right|.$ The current limitation module 403 changes the value of the q axis reference if current in the stator is higher than the allowed current $\left|i_s^{max}\right|.$

$$\begin{cases} i_q^{**} = i_q^* & if \sqrt{i_d^{*2} + i_q^{*2}} < \left|i_s^{max}\right| \\ i_q^{**} = \sqrt{\left|i_s^{max}\right|^2 - i_d^{*2}} & if \sqrt{i_d^{*2} + i_q^{*2}} > \left|i_s^{max}\right| \end{cases}$$

The subtracting module 404 subtracts the incremental saliency ratio reference $ISR^*$ to the estimated incremental saliency ratio $\widehat{ISR} = \frac{\hat{l}_{\hat{d}}}{\hat{l}_{\hat{q}}}$ and provides the result of the subtracting to the proportional integral module 405.

The output of the proportional integral module 404 is provided to the current limitation module 403 and to the Torque module 402 .

The outputs of the proportional integral module 405 and the current limitation module 403 are combined in order to provide the reference current $i_{dq}^*$.

Then, $i_d^* = K_{p,ISR}\left(ISR^* - \widehat{ISR}\right) + K_{i,ISR} \int \left(ISR^* - \widehat{ISR}\right) dt$ where $K_{p,ISR}$ and $K_{i,ISR}$ are constants of the first proportional integral module 405. $i_q^* = \dfrac{T^*}{I_d^* K_L}$, where $T^*$ is the torque reference and

$$T^* = K_{p,\omega}\left(\omega^* - \widehat{\omega}\right) + K_{i,\omega} \int \left(\omega^* - \widehat{\omega}\right) dt$$

where $K_{p,\omega}$ and $K_{i,\omega}$ are constants of the second proportional integral module 401.

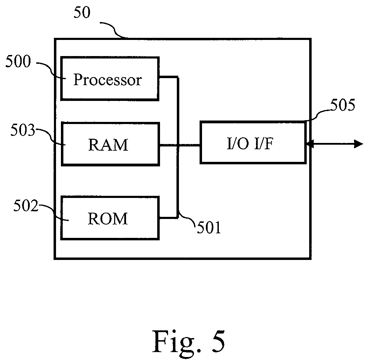

**Fig. 5** represents an architecture of a control module that controls a motor.

The control module 50 has, for example, an architecture based on components connected together by a bus 501 and a processor 500 controlled by a program.

The bus 501 links the processor 500 to a read only memory ROM 502, a random access memory RAM 503, and an input output I/O interface I/F 505.

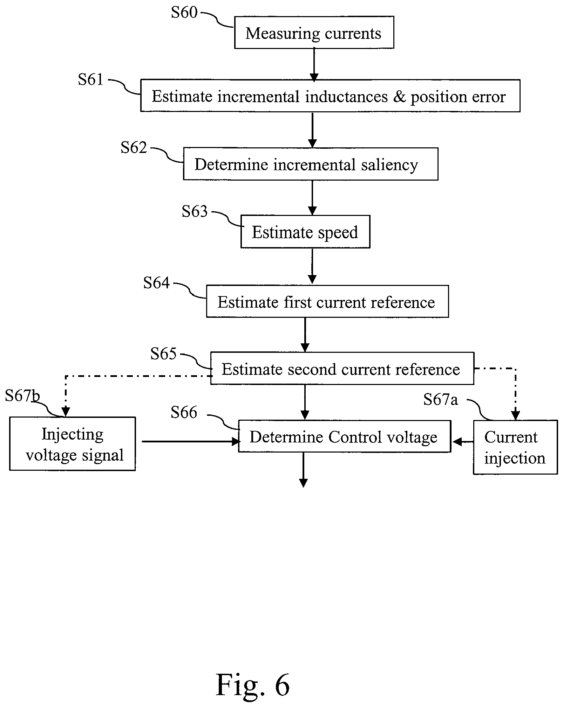

The memory 503 contains registers intended to receive variables and the instructions of the program related to the algorithm disclosed in Fig. 6.

The read-only memory, or possibly a flash memory 502, contains instructions of the program related to the algorithm disclosed in Fig. 6.

When the control module 50 is powered on, the instructions stored in the memory 502 are transferred to the random access memory 503.

The control module 50 may be implemented in software by execution of a set of instructions or program by a programmable computing machine, such as a PC (*Personal Computer*), a DSP (*Digital Signal Processor*) or a microcontroller; or else implemented in hardware by a machine or a dedicated component, such as an FPGA (*Field-Programmable Gate Array*) or an ASIC (*Application-Specific Integrated Circuit*).

In other words, the control module 50 includes circuitry enabling the control module 50 to perform the program.

**Fig. 6** represents an example of an algorithm for controlling a motor.

At step S60 the currents at the output of the inverter are measured.

At step S61, the control module 50 estimates in a *dq* plane the incremental inductances $\widehat{l_d}$ and $\widehat{l_q}$ and an estimated position error $\widehat{\varepsilon}$ of the rotor of the motor, as disclosed for the modules 108, 208 and 308.

At step S62, the control module 50 determines an incremental saliency $\widehat{ISR}$ of the motor as a ratio between the incremental inductance $\widehat{l_d}$ and the incremental inductance $\widehat{l_q}$ and the estimated position error, as disclosed for the modules 108, 208 and 308.

At step S63, the control module 50 estimates the rotor speed value $\widehat{\omega}$ of the motor by means of the position estimated error $\widehat{\varepsilon}$ obtained at step S61 using the phase lock loop module 109.

At step S64, the control module 50 estimates a first current $I_d^*$ from the estimated incremental saliency and a reference incremental saliency *ISR,* as disclosed in reference to the module 100, and further in detail with the modules 404 and 405.

At step S65, the control module 50 estimates a second current $I_q^*$ from a reference rotor speed value $\omega^*$, the estimated rotor speed value $\widehat{\omega}$ and the first current $I_d^*$ as disclosed in reference to the module 100, and in further detail by the modules 400, 401, 402 and 403.

The first and second currents $I_d^*$ and $I_q^*$ are determined as:

$$I_d^* = K_{p,ISR}\left(ISR^* - \widehat{ISR}\right) + K_{i,ISR} \int \left(ISR^* - \widehat{ISR}\right) dt$$

$$I_q^* = \frac{T^*}{I_d^* K_L},$$

where $K_{p,ISR}$ and $K_{i,ISR}$ are constants of the first proportional integral module. where $T^*$ is the torque of the motor and

$$T^* = K_{p,\omega}(\omega^* - \hat{\omega}) + K_{i,\omega} \int (\omega^* - \hat{\omega})\, dt$$

where $K_{p,\omega}$ and $K_{i,\omega}$ are constants of the second proportional integral module, with $K_L = (L_d - L_q).L_d$, $L_q$ estimation(e.g.

$$\left| V_{dq}/\hat{\omega} I_{qd} \right|$$ or using nameplate values).

In a variant, the torque reference is identified as current reference $I_q^*$ in the q axis. The torque reference $T^*$ issued by the second PI regulator is a virtual torque, representative of $I_q^*$ rather than torque.

At step S66, the control module 50 determines the voltage to be used for controlling the motor M.

According to the first example at step S67b, the voltage is calculated by the blocs 101, 103 and 104 and the voltage applied on the motor is:

$$v_{\hat{d}}^{**} = v_{dh}^* \cos(\omega_{dh} t) + v_{\hat{d}}^*$$

$$v_{\hat{q}}^{**} = v_{qh}^* \cos(\omega_{qh} t) + v_{\hat{q}}^*$$

where $v_{\hat{d}}^*$ and $v_{\hat{q}}^*$ are obtained by:

$$v_{\hat{d}}^* = K_{p,Id}(I_d^* - I_{\hat{d}}) + K_{i,Id} \int (I_d^* - I_{\hat{d}})\, dt$$

$$v_{\hat{q}}^* = K_{p,Iq}(I_q^* - I_{\hat{q}}) + K_{i,Iq} \int (I_q^* - I_{\hat{q}})\, dt$$

where $K_{p,Id}$ is the proportional gain of a third proportional integral regulator, $K_{i,Id}$ is the integral gain for the d axis of the third proportional integral regulator, $K_{p,Iq}$ is the proportional gain of a fourth proportional integral filter and $K_{i,Iq}$ is the integral gain for the q axis of the fourth proportional integral regulator. According to the second example, the voltage to be used for controlling the motor M is determined from the modules 200, which is composed by the modules 201 and 202:

$$v_{\hat{d}}^* = i_{\hat{d}}^k R_s + \hat{l}_{\hat{d}}(i_{\hat{d}}^* - i_{\hat{d}}^{k+1})/T_s$$

$$v_{\hat{q}}^* = i_{\hat{q}}^k R_s + \hat{l}_{\hat{q}}(i_{\hat{q}}^* - i_{\hat{q}}^{k+1})/T_s$$

According to the third example, at step S67a a supplementary injection to the current $i_d^*$ is performed as: $i_d^{**} = i_d^* + i_{dh}^* \cos(\omega_h t)$ by the modules 201. The voltage to be used for controlling the motor M is determined by the module 200, which is composed by the modules 201 and 202:

$$v_{\hat{d}}^* = i_{\hat{d}}^k R_s + \hat{l}_{\hat{d}}(i_{\hat{d}}^* - i_{\hat{d}}^{k+1})/T_s$$

$$v_{\hat{q}}^* = i_{\hat{q}}^k R_s + \hat{l}_{\hat{q}}(i_{\hat{q}}^* - i_{\hat{q}}^{k+1})/T_s$$

The determined control voltage is then applied to the motor M.

Naturally, many modifications can be made to the embodiments of the invention described above without departing from the scope of the present invention.

**Claims**

1. A method for controlling a three-phase motor using a field oriented control system, **characterized in that** the method comprises the steps of:

    - estimating, in a *dq* plane the incremental inductances $\hat{l}_d$ and $\hat{l}_q$ of the motor,
    - determining an incremental saliency *ISR* of the motor as a ratio between the incremental inductance $\hat{l}_d$ and the incremental inductance $\hat{l}_q$,

    - estimating a first current $i_d{}^*$ from the estimated incremental saliency $\widehat{ISR}$ and a reference incremental saliency $ISR^*$,
    - estimating the rotor speed value $\hat{\omega}$ of the motor,
    - estimating a second current $i_q{}^*$ from a reference rotor speed value $\omega^*$, and the estimated rotor speed value $\hat{\omega}$,
    - controlling the voltage applied to the motor according to the first and second estimated currents.

2. The method according to claim 1, **characterized in that** the first and second estimated currents are estimated as:

$$i_d{}^* = K_{p,ISR}\left(ISR^* - \widehat{ISR}\right) + K_{i,ISR}\int\left(ISR^* - \widehat{ISR}\right)dt$$ where $K_{p,ISR}$ and $K_{i,ISR}$ are constants of a first proportional integral regulator. $$i_q{}^* = \frac{T^*}{I_d{}^*K_L},$$ where $T^*$ is the torque of the motor and

$$T^* = K_{p,\omega}\left(\omega^* - \hat{\omega}\right) + K_{i,\omega}\int\left(\omega^* - \hat{\omega}\right)dt$$

where $K_{p,\omega}$ and $K_{i,\omega}$ are constants of a second proportional integral regulator.

3. The method according to claims 1 or 2, **characterized in that** the method further comprises the step of estimating a position error of the rotor of the motor and the estimated rotor speed value $\hat{\omega}$ is estimated using a phase lock loop having as input signal the estimated position error.

4. The method according to any of the claims 1 to 3, **characterized in that** the voltage applied to the motor is a voltage vector and consecutive voltage vectors are applied successively during successive periods of time, the estimated incremental inductances are estimated from a stator flux linkage of the motor on *d* or *q* axis and a steady state position error $\varepsilon$ is determined.

5. The method according to claim 4, **characterized in that** the incremental inductance $\hat{l}_d$ and the incremental inductance $\hat{l}_q$ are defined as:

$$\hat{l}_{\hat{d}} = \frac{\Delta\lambda_{\hat{d}}^k\Delta\lambda_{\hat{q}}^{k-1} - \Delta\lambda_{\hat{q}}^k\Delta\lambda_{\hat{d}}^{k-1}}{\Delta I_{\hat{d}}^k\Delta\lambda_{\hat{q}}^{k-1} - \Delta I_{\hat{q}}^k\Delta\lambda_{\hat{d}}^{k-1}}$$

$$\hat{l}_{\hat{q}} = \frac{\Delta\lambda_{\hat{q}}^k\Delta\lambda_{\hat{d}}^{k-1} - \Delta\lambda_{\hat{d}}^k\Delta\lambda_{q}^{k-1}}{\Delta I_{\hat{q}}^k\Delta\lambda_{\hat{d}}^{k-1} - \Delta I_{\hat{d}}^k\Delta\lambda_{\hat{q}}^{k-1}}$$

where $k$ denotes the discrete domain representation of the $k^{th}$ sampling instant, $\Delta$ symbolizes $\Delta x^k = x^k - x^{k-1}$, $v_{dq,k}$, $\lambda_{dq}$ is the stator flux linkage on d or q axis.

6. The method according to claim 5, **characterized in that** the consecutive voltage vectors are defined as:

$$v_{\hat{d}}^* = i_{\hat{d}}^k R_s + \hat{l}_{\hat{d}}\left(i_d{}^* - i_{\hat{d}}^{k+1}\right)/T_s$$

$$v_{\hat{q}}^* = i_{\hat{q}}{}^k R_s + \hat{l}_{\hat{q}}\left(i_q{}^* - i_{\hat{q}}{}^{k+1}\right)/T_s$$

where $R_s$ is the stator resistance of the motor and $T_s$ is the sampling time.

7. The method according to claim 1 to 3 **characterized in that** the method further comprises the step of injecting voltage signals that are equal to $v_{dh}^* \cos(\omega_{qh}t)$ and $v_{qh}^* \cos(\omega_{qh}t),$ where $\omega_{qh}$ and $\omega_{qh}$ are the injection frequencies on axis d and q respectively, $v_{dh}^*$ and $v_{qh}^*$ are the amplitude of the injected voltage in axis d and q respectively, the incremental inductances $\hat{l}_{\hat{d}}$ and $\hat{l}_{\hat{q}}$ of the motor are estimated as:

$$\hat{l}_{\hat{d}} = \frac{v_{dh}^*}{i_{dh}\omega_{dh}}$$

$$\hat{l}_q = \frac{v_{qh}^*}{i_{qh}\omega_{qh}}$$

where $i_{dH}$ is the high frequency current component on d axis, $i_{qh}$ is the high frequency current component on q axis, , $i_{dh}$, $i_{qh}$, are obtained by a heterodyne demodulation,
and the estimated position error is:

$$\hat{\varepsilon} = \frac{\hat{l}_{\hat{d}}\hat{l}_{\hat{q}}}{\hat{l}_{\hat{d}} - \hat{l}_{\hat{q}}}\frac{i_{qh}\omega_{dh}}{v_{dh}^*}$$

8. The method according to claim 1 to 3 **characterized in that** the method further comprises the step of injecting voltage signals that are equal to $v_{dh}^* \cos(\omega_{dh}t)$ with a frequency of $\omega_{dh}$ on the d axis and a squarewave injection on the q axis of period $T_s$ and amplitude $v_q^*$, and incremental inductances are:

$$\hat{l}_{\hat{d}} = \frac{v_{dh}^*}{i_{dh}\omega_{dh}}$$

$$\hat{l}_{\hat{q}} = LPF\left(\frac{v_q^{k-1}T_s}{\Delta i_q^k}\right)$$

where LPF denotes a low pass filter, $k$ denotes the discrete domain representation of the $k^{th}$ sampling instant, $\Delta$ symbolizes $\Delta x^k = x^k - x^{k-1}$
and the estimated position error is:

$$\hat{\varepsilon} = \frac{\hat{l}_{\hat{d}}\hat{l}_{\hat{q}}}{\hat{l}_{\hat{d}} - \hat{l}_{\hat{q}}}\frac{i_{qh}\omega_{dh}}{v_{dh}^*}$$

9. The method according to claim 7, **characterised in that** the voltage applied to the motor is determined as:

$$v_{\hat{d}}^{**} = v_{dh}^* \cos(\omega_{dh} t) + v_{\hat{d}}^*$$

$$v_{\hat{q}}^{**} = v_{qh}^* \cos(\omega_{qh} t) + v_{\hat{q}}^*$$

with:

$$v_{\hat{d}}^* = K_{p,Id}(I_d^* - I_{\hat{d}}) + K_{i,Id} \int (I_d^* - I_{\hat{d}})\, dt$$

$$v_{\hat{q}}^* = K_{p,Iq}(I_q^* - I_{\hat{q}}) + K_{i,Iq} \int (I_q^* - I_{\hat{q}})\, dt$$

where $K_{p,Id}$ is the proportional gain of a third proportional integral regulator, $K_{i,Id}$ is the integral gain for the d axis of the third proportional integral regulator, $K_{p,Iq}$ is the proportional gain of a fourth proportional integral regulator and $K_{i,Iq}$ is the integral gain for the q axis of the fourth proportional integral regulator.

10. The method according to claim 1 to 5 **characterized in that** the method further comprises the step of injecting a current $i_{dh}^* cos(\omega_h t)$ on the current reference of the $d$ axis and the incremental inductances are equal to:

$$\hat{l}_{\hat{q}} = \frac{\Delta \lambda_{\hat{q}}^k \Delta \lambda_d^{k-1} - \Delta \lambda_{\hat{d}}^k \Delta \lambda_q^{k-1}}{\Delta I_{\hat{q}}^k \Delta \lambda_{\hat{d}}^{k-1} - \Delta I_{\hat{d}}^k \Delta \lambda_{\hat{q}}^{k-1}}$$

$$\hat{l}_d = \frac{\widehat{v_{dh}}}{i_{dh}^* \omega_h}$$

where $k$ denotes the discrete domain representation of the $k^{th}$ sampling instant, $\Delta$ symbolizes $\Delta x^k = x^k - x^{k-1}$, $v_{dq,k}$, $\lambda_{dq}$ is the stator flux linkage on d or q axis, and $\widehat{v_{dh}}$ is the high frequency amplitude of voltage.

11. The method according to claim 10, **characterised in that** the voltage applied to the motor is determined from:

$$v_{\hat{d}}^* = i_{\hat{d}}^k R_s + \hat{l}_{\hat{d}}(i_d^* - i_{\hat{d}}^{k+1})/T_s$$

$$v_{\hat{q}}^* = i_{\hat{q}}^k R_s + \hat{l}_{\hat{q}}(i_q^* - i_{\hat{q}}^{k+1})/T_s$$

where $R_s$ is the stator resistance of the motor and $T_s$ is the sampling time.

12. A device for controlling a three-phase motor using a field oriented control system, **characterized in that** the device comprises:

- means for estimating in a $dq$ plane the incremental inductances $\hat{l}_{\hat{d}}$ and $\hat{l}_{\hat{q}}$ of the motor,
- means for determining an incremental saliency $\widehat{ISR}$ of the motor as a ratio between the incremental inductance $\hat{l}_{\hat{d}}$ and the incremental inductance $\hat{l}_{\hat{q}}$,
- means for estimating a first current $I_d^*$ from the estimated incremental saliency $ISR$ and a reference incremental saliency $ISR^*$,
- means for estimating the rotor speed value $\hat{\omega}$ of the motor,
- means for estimating a second current $I_q^*$ from a reference rotor speed value $\omega^*$, and the estimated rotor speed

value $\hat{\omega}$,

- means for controlling the voltage applied to the motor according to the first and second estimated currents.

Fig. 1

Fig. 2

Fig. 3

Fig. 4

Fig. 5

S60 — Measuring currents

S61 — Estimate incremental inductances & position error

S62 — Determine incremental saliency

S63 — Estimate speed

S64 — Estimate first current reference

S65 — Estimate second current reference

S67b — Injecting voltage signal

S66 — Determine Control voltage

S67a — Current injection

# Fig. 6

Europäisches
Patentamt

European
Patent Office

Office européen
des brevets

# EUROPEAN SEARCH REPORT

Application Number

EP 20 31 5433

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | VARATHARAJAN ANANTARAM ET AL: "Sensorless Synchronous Reluctance Motor Drives: A Full-Speed Scheme Using Finite-Control-Set MPC in a Projection Vector Framework", IEEE TRANSACTIONS ON INDUSTRY APPLICATIONS, IEEE SERVICE CENTER, PISCATAWAY, NJ, US, vol. 56, no. 4, 27 April 2020 (2020-04-27), pages 3809-3818, XP011799189, ISSN: 0093-9994, DOI: 10.1109/TIA.2020.2990834 [retrieved on 2020-07-17] | 1,12 | INV. H02P21/18 H02P6/18 H02P21/24 |
| A | * abstract * * Introduction * * page 3811, D. Saliency Analyses * * figures 1, 3 * | 2-11 | |
| Y | WO 00/25418 A1 (GEN ELECTRIC [US]) 4 May 2000 (2000-05-04) | 1,12 | |
| A | * page 5, line 17 - page 6, line 2 * * page 6, lines 7-15 * * figure 1 * | 2-11 | |

TECHNICAL FIELDS
SEARCHED (IPC)

H02P

The present search report has been drawn up for all claims

| Place of search | Date of completion of the search | Examiner |
|---|---|---|
| Munich | 31 March 2021 | Roider, Anton |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 31 5433

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2021

| Patent document cited in search report | | Publication date | Patent family member(s) | | Publication date |
|---|---|---|---|---|---|
| WO 0025418 | A1 | 04-05-2000 | AU | 6258099 A | 15-05-2000 |
| | | | CA | 2315396 A1 | 04-05-2000 |
| | | | EP | 1044497 A1 | 18-10-2000 |
| | | | JP | 2002529044 A | 03-09-2002 |
| | | | US | 6137258 A | 24-10-2000 |
| | | | WO | 0025418 A1 | 04-05-2000 |

EPO FORM P0459

For more details about this annex : see Official Journal of the European Patent Office, No. 12/82

# EP 3 982 534 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. LAUMANN ; C WEINER ; R. KENNEL.** Arbitrary injection based sensorless control with a defined high frequency current ripple and reduced current and sound level harmonics. *SLED,* 2017